# DEMANDE DE BREVET EUROPEEN

(11) **EP 1 391 853 A1**
(43) Date de publication de la demande: **25.02.2004**
(21) Numéro de dépôt: 02354156.8
(22) Date de dépôt: 07.10.2002
(51) Int. Cl.: G07F 7/10

(54) **Diversification d'un identifiant unique d'un circuit intégré**

(30) Priorité: 30.11.2001 FR 0115531
(71) Demandeur: STMicroelectronics S.A., 92120 Montrouge (FR)
(72) Inventeur: Wuidart, Luc, 83910 Pourrieres (FR); Bardouillet, Michel, 13790 Rousset (FR); Plaza, Laurent, 13710 Fuveau (FR)
(74) Mandataire: de Beaumont, Michel

(57) **Abrégé**

L'invention concerne un procédé et un circuit de génération de plusieurs quantités secrètes (KEYi) par un circuit intégré en fonction de la destination de ces quantités secrètes, caractérisé en ce qu'il consiste à prendre en compte un premier mot numérique constituant identifiant unique de la puce de circuit intégré et provenant d'un réseau de paramètres physiques (2) et à individualiser cet identifiant en fonction de l'application.

## Description

La présente invention concerne l'utilisation d'une quantité secrète issue d'un circuit intégré ou d'un élément de sous-ensemble électronique contenant un tel circuit. Par exemple, l'invention concerne l'utilisation d'une telle quantité secrète par des programmes en tant que clé de chiffrement, ou en tant que quantité secrète d'un processus d'identification ou d'authentification du circuit intégré. L'invention concerne plus particulièrement les circuits intégrés susceptibles d'exécuter plusieurs programmes d'application différents, que ces programmes soient contenus dans le circuit intégré ou le sous-ensemble électronique qui le contient ou soient logés dans des systèmes distants.

Un exemple d'application de la présente invention concerne les cartes à puce où la puce de circuit intégré peut être utilisée à plusieurs fins (par exemple, un paiement électronique, une identification du titulaire, etc.). Dans ce cas, il est souhaitable de ne pas utiliser une même quantité (donnée numérique) secrète (d'authentification du circuit intégré ou de chiffrement de données) pour tous les programmes applicatifs susceptibles d'utiliser cette puce. En effet, si un pirate tente d'exécuter un programme applicatif frauduleux à partir de la puce du circuit intégré, la quantité secrète de la puce est également utilisée. Le système distant exécutant l'application frauduleuse peut récupérer la quantité ou clé secrète de la puce. Cette quantité peut ensuite être utilisée frauduleusement pour d'autres applications.

Pour éviter ce genre de fraudes, les systèmes classiques utilisant des cartes à puce dans lesquelles la transmission avec le terminal d'exploitation peut s'effectuer avec ou sans contact, prévoient que la quantité secrète de la puce n'est pas lue par le programme applicatif mais est générée à la demande du programme applicatif par le système d'exploitation de la carte à puce (par exemple, un système d'exploitation connu sous la dénomination commerciale JAVACard).

Ces solutions classiques requièrent des ressources importantes en termes de programmation pour exécuter les processus d'authentification ou de chiffrement.

La présente invention concerne plus particulièrement la génération de quantités secrètes distinctes selon les applications.

Parmi les moyens de génération d'une quantité secrète au sein d'un circuit intégré, on distingue essentiellement les solutions ayant recours à des éléments de mémorisation et celles provoquant une génération d'un mot binaire sur la base d'un réseau de paramètres physiques lié à la fabrication du circuit intégré.

On pourrait penser multiplier le nombre de réseaux de paramètres physiques pour qu'ils correspondent au nombre d'applications que peut traiter le circuit intégré. Toutefois, une telle solution requiert beaucoup de place et comporte un risque non négligeable d'obtenir des quantités secrètes identiques générées par le réseau de paramètres physiques.

En outre, chaque application peut nécessiter une taille minimale de la quantité secrète supérieure à la taille de la quantité issue directement du réseau de paramètres physiques.

L'invention vise à pallier les inconvénients des solutions connues requérant une individualisation de quantités secrètes selon les programmes applicatifs mettant en oeuvre une puce de circuit intégré.

L'invention vise plus particulièrement à proposer une solution qui soit compatible avec l'utilisation d'un réseau de paramètres physiques pour la génération de la quantité secrète.

L'invention vise également à proposer une solution qui soit compatible avec les procédés classiques d'exploitation de quantités secrètes dans des applications d'authentification ou de chiffrement. En particulier, elle vise à rester compatible avec une authentification par les programmes applicatifs eux-mêmes, sans nécessiter des protocoles complexes d'authentification par un système central.

L'invention vise en outre à proposer une solution qui soit peu encombrante sur la puce de circuit intégré.

Pour atteindre ces objets et d'autres, la présente invention prévoit un procédé de génération de plusieurs quantités secrètes par un circuit intégré en fonction de la destination de ces quantités secrètes, consistant à prendre en compte un premier mot numérique constituant un identifiant unique de la puce de circuit intégré et provenant d'un réseau de paramètres physiques, et à individualiser cet identifiant en fonction de l'application.

Selon un mode de mise en oeuvre de la présente invention, on combine le premier mot numérique avec un deuxième mot issu d'une mémoire non volatile en contenant plusieurs.

Selon un mode de mise en oeuvre de la présente invention, on utilise le mot issu du réseau de paramètres physiques dans un registre à décalage à rétroaction.

Selon un mode de mise en oeuvre de la présente invention, on utilise plusieurs registres à décalage à rétroaction.

Selon un mode de mise en oeuvre de la présente invention, le ou les registres à décalage sont à rétroaction linéaire.

L'invention prévoit également une cellule de génération de plusieurs quantités secrètes au moyen d'un identifiant unique d'un circuit intégré issu d'un réseau de paramètres physiques, comportant des moyens pour individualiser un premier mot numérique issu du réseau de paramètres physiques à partir d'un paramètre fonction de la quantité souhaitée.

Selon un mode de réalisation de la présente invention, la cellule comporte au moins un registre à décalage à rétroaction, destiné à être chargé avec le premier mot issu du réseau de paramètres physiques, et à fournir une desdites quantités secrètes.

Selon un mode de réalisation de la présente invention, la cellule comporte un combineur du premier mot issu du réseau de paramètres physiques avec un deuxième mot numérique, extrait d'une mémoire non volatile et sélectionné en fonction d'un paramètre choisi selon la quantité souhaitée.

Selon un mode de réalisation de la présente invention, la cellule comporte en outre un brouilleur des mots contenus dans la mémoire non volatile, à partir du réseau de paramètres physiques.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente, par une vue très schématique et sous forme de blocs, un premier mode de réalisation d'une cellule de génération d'une quantité secrète en fonction de l'application courante selon la présente invention ;
la figure 2 illustre une variante de la cellule de la figure 1 ;
la figure 3 représente, de façon très schématique et sous forme de blocs, un deuxième mode de réalisation d'une cellule de génération d'une quantité secrète en fonction de l'application selon la présente invention ;
la figure 4 représente un mode de réalisation d'un registre à décalage du mode de réalisation de la figure 3 ; et
la figure 5 représente un registre à décalage à rétroaction linéaire simplifié de quatre bits.

Les mêmes éléments ont été désignés par les mêmes références aux différentes figures. Pour des raisons de clarté, seuls les éléments et étapes de procédé qui sont nécessaires à la compréhension de l'invention ont été représentés aux figures et seront décrits par la suite. En particulier, les programmes applicatifs utilisant les quantités (données numériques) générées par l'invention n'ont pas été détaillés et ne font pas l'objet de la présente invention.

Une caractéristique de la présente invention est de générer une quantité secrète prenant en compte un identifiant basé sur un réseau de paramètres physiques de la puce de circuit intégré et l'application concernée. En d'autres termes, l'invention prévoit d'individualiser les quantités secrètes fournies selon l'application requérant la quantité secrète, en utilisant toujours pour base un même réseau de paramètres physiques.

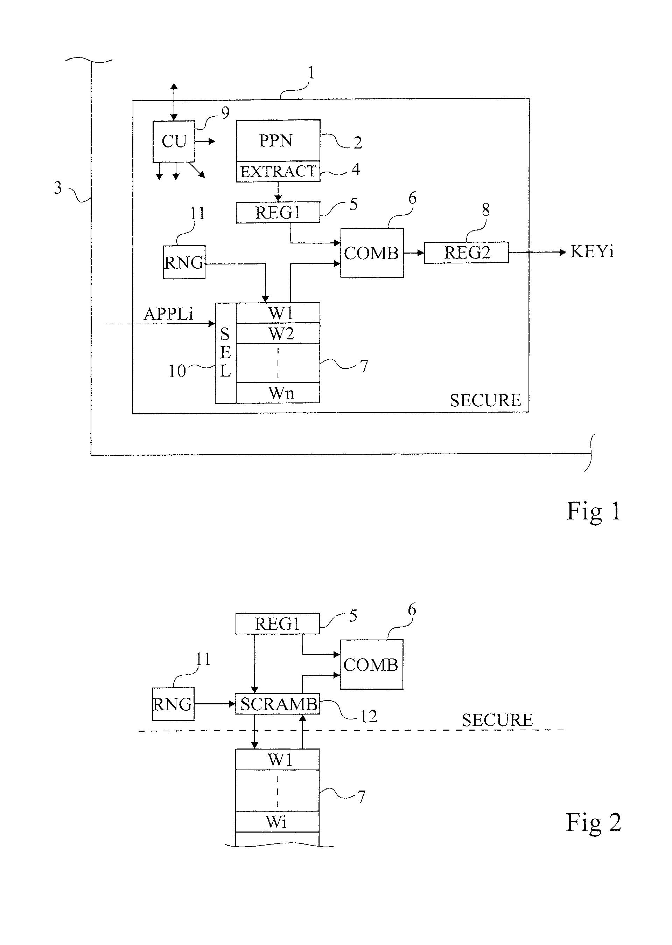

La figure 1 représente, de façon très schématique et sous forme de blocs, un premier mode de réalisation d'une cellule 1 de génération d'une quantité, clé ou donnée secrète KEYi à partir d'un réseau de paramètres physiques 2 (PPN) et en fonction du programme applicatif (ou de l'application) réclamant cette quantité. L'information relative au programme applicatif est fournie à la cellule 1 sous la forme d'un paramètre numérique APPLi.

La cellule 1 fait partie d'un circuit intégré 3 constituant, par exemple, la puce d'une carte à puce.

Le réseau de paramètres physiques 2 est associé à un circuit 4 d'extraction (EXTRACT) des signaux issus du réseau 2 pour générer un premier mot numérique stocké dans un élément de mémorisation temporaire 5 (REG1) et constituant un identifiant unique de la puce de circuit intégré.

Selon le premier mode de réalisation de l'invention illustré par la figure 1, le premier mot numérique est combiné dans un circuit 6 de combinaison (COMB) avec un deuxième mot numérique (W1, W2, ... Wn) stocké dans une mémoire non volatile 7 et fonction de l'application. On affecte, à chaque application susceptible de requérir un mot numérique d'authentification, une clé de chiffrement ou tout autre quantité secrète KEYi propre à la cellule 1, un mot Wi destiné à être combiné avec l'identifiant unique de la puce de circuit intégré. Le résultat de la combinaison est stocké dans un élément de mémorisation temporaire 8 (REG2).

La sélection du mot de personnalisation de la quantité selon l'application est effectuée au moyen d'un sélecteur 10 commandé par le signal APPLi. Si la table de mots 7 correspond à un espace d'une mémoire ROM ou EEPROM du circuit intégré, le sélecteur correspond bien entendu au circuit d'adressage de cette mémoire.

La génération (pour mémorisation) des mots Wi associés aux différentes applications est faite lors d'une phase de personnalisation préalable à l'utilisation de la puce. Les mots Wi peuvent provenir d'un générateur 11 de mots aléatoires, ou d'une table préétablie. On peut en outre prévoir la génération d'un mot supplémentaire Wi lors de l'ajout d'une nouvelle fonctionnalité, c'est-à-dire au moment où la carte à puce est configurée pour fonctionner avec une nouvelle application. En variante, le générateur 11 est externe à la cellule 1.

La cellule 1 comporte en outre une unité centrale 9 (CU) chargée de contrôler et de synchroniser le fonctionnement de l'ensemble de ses constituants. En figure 1, les différentes liaisons de l'unité centrale aux autres éléments n'ont pas été détaillées. Cette unité 9 communique notamment avec le reste du circuit intégré 3 pour, à tout le moins, exécuter des instructions correspondant à la demande de fourniture de la quantité secrète par la cellule 1.

Un avantage qu'il y a à combiner l'identifiant issu du réseau de paramètres physiques avec un mot fonction de l'application est que cela sécurise de façon optimale l'exploitation des quantités secrètes. En particulier, si un pirate met en oeuvre une application frauduleuse et demande une quantité secrète, la quantité qui va lui être délivrée ne lui permettra pas d'utiliser cette quantité, par exemple, pour s'authentifier frauduleusement sur d'autres systèmes applicatifs.

Selon un mode de réalisation simplifié, le nombre n de mots à stocker dans la mémoire 7 est prédéfini à la fabrication et les mots sont générés lors de la fabrication ou d'une première utilisation de la puce. Par la suite, à chaque nouvelle application requérant une quantité d'authentification, une clé de chiffrement ou analogue, on affecte un numéro d'ordre dans la table des mots 7.

Le réseau de paramètres physiques pourra être constitué de tout réseau classique. Il pourra s'agir, par exemple, d'un réseau de mesure de paramètres électriques sous la forme d'une mesure d'une tension seuil d'un transistor, d'une mesure de résistance ou d'une mesure de capacité parasite, d'une mesure de courant produit par une source de courant, d'une mesure de constante de temps (par exemple, un circuit RC), d'une mesure d'une fréquence d'oscillation, etc. Comme ces caractéristiques sont sensibles aux dispersions technologiques et de procédé de fabrication, on peut considérer que le ou les paramètres électriques pris en compte sont propres à la puce et constitue une signature de celle-ci.

Dans l'exemple d'une mesure de paramètres électriques, les signaux sont convertis en signaux numériques au moyen d'un convertisseur analogique-numérique que comporte l'extracteur 4 et sont le cas échéant multiplexés pour constituer le premier mot numérique stocké dans le registre 5.

En guise de réseau de paramètres physiques, on pourra également recourir à des circuits faisant appel à une mesure temporelle. Par exemple, on mesure le temps de lecture/écriture d'une mémoire de type EEPROM. Un exemple de réseau de paramètres physiques de ce type est décrit dans le brevet américain n° 5818738.

On pourra encore utiliser un réseau de paramètres physiques à base de bascules tel que décrit dans la demande de brevet français n° 0104585 de la demanderesse.

La figure 2 illustre une variante de la cellule représentée en figure 1. Selon cette variante, le mot binaire issu du réseau de paramètres physiques qui est stocké dans le registre 5 sert, lors de l'écriture des mots dans la table 7 de mémoire non volatile, à brouiller ces mots. La cellule comporte donc en outre un brouilleur ou codeur 12 (SCRAMB) auquel est relié le générateur aléatoire 11 ainsi que le registre 5 et le combineur 6. Le codeur 12 est également relié à la table 7.

En utilisation, le circuit 12 sert de décodeur au mot Wi extrait de la table 7 pour qu'il soit utilisé par le combineur 6. Le décodage s'effectue là encore sur la base du mot contenu dans le registre 5 et extrait du réseau de paramètres physiques.

De préférence, dans le mode de réalisation de la figure 1, la mémoire non volatile servant au stockage de la table 7 est sécurisée (SECURE) comme tout le reste de la cellule 1. Par contre, dans le mode de réalisation illustré par la figure 2, on peut plus facilement se dispenser d'intégrer la mémoire non volatile servant au stockage de la table 7 dans la zone sécurisée contenant le reste de la cellule. La variante de la figure 2 permet donc d'utiliser une mémoire externe (non sécurisée). Par zone sécurisée, on entend une zone du circuit qui n'est pas susceptible d'être piratée par détection de signaux électriques. Par exemple, il s'agit d'une cellule noyée dans une résine dont la température de fusion est supérieure à la température de détérioration des circuits, ce qui empêche toute analyse par contact électrique.

On notera que le mot servant à brouiller les mots Wi peut, tout en provenant du réseau de paramètres physiques, être différent du mot utilisé par le combineur 6. Par exemple, on peut utiliser une partie du mot contenu dans le registre 5 ou prévoir un autre registre de stockage temporaire d'un mot issu du réseau de paramètres physiques qui soit différent du mot utilisé par le combineur 6.

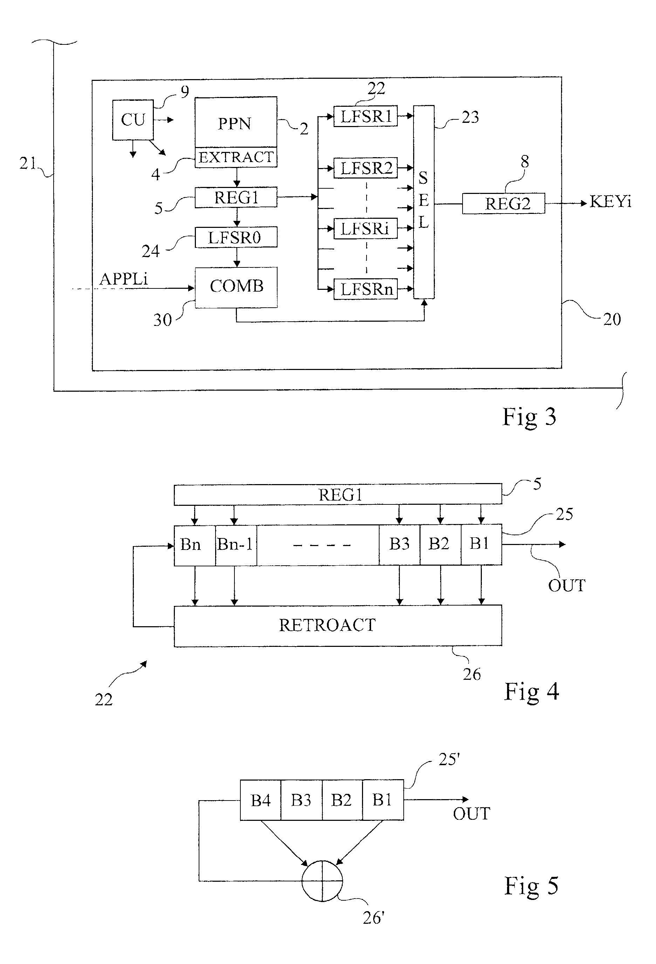

La figure 3 représente, de façon très schématique et sous forme de blocs, un deuxième mode de réalisation d'une cellule 20 de génération d'une quantité secrète fonction de l'application dans une puce de circuit intégré 21. Comme dans le premier mode de réalisation, la cellule 20 reçoit, en guise de paramètre, un code APPLi représentant le programme applicatif requérant la clé KEYi que la cellule 20 génère dans un registre 8. De même, la cellule 20 comporte un réseau de paramètres physiques 2 associé à un circuit d'extraction 4 et à un registre 5, ainsi qu'une unité centrale 9 ayant les mêmes fonctions que celles décrites en relation avec la figure 1.

Selon ce deuxième mode de réalisation, le mot binaire extrait du réseau de paramètres physiques est utilisé pour programmer au moins un registre à décalage à rétroaction linéaire 22 (LFSRi). Dans l'exemple de la figure 3, on prévoit n registres 22, le nombre n correspondant au nombre de quantités différentes que l'on souhaite pouvoir fournir au moyen de la cellule 20. Un sélecteur 23 (SEL), par exemple un multiplexeur, reçoit les sorties des registres 22 et fournit un mot numérique au registre 8. Le sélecteur 23 est, par exemple, commandé directement par le signal APPLi paramétrant la cellule 20 en fonction de l'application concernée. En variante, le sélecteur 23 peut être situé en amont des registres 6 plutôt qu'en aval.

De préférence, le signal APPLi de sélection est combiné (combineur 30) avec un mot issu du réseau de paramètres physiques. Il peut s'agir de tout ou partie du registre 5 ou, comme cela est illustré par la figure 3, d'un mot issu d'un registre à décalage supplémentaire 24 (LFSR0). Le combineur 30 peut être un ensemble quelconque de portes logiques. Par exemple, on peut appliquer une combinaison de type OU-Exclusif d'un mot issu du registre 5 ou 24 et du mot APPLi. Le mot APPLi peut consister en un nombre de bits pris au début du code du programme applicatif. En choisissant un nombre suffisant de bits (par exemple, 512 ou 1024), on garantit que deux applications aient peu de risque de fournir des mots APPLi identiques.

Cette variante préférée est donc une combinaison ou un brouillage du mot de paramétrage APPLi au moyen du réseau de paramètres physiques. Elle peut aussi être mise en oeuvre dans le mode de réalisation de la figure 1.

Un exemple d'application du mode de réalisation de la figure 3 est la différentiation de la quantité secrète issue du réseau de paramètres physiques selon les applications dans un réseau de type Internet. Ce mode de réalisation est particulièrement efficace contre des attaques de type "cheval de Troie" où un pirate essaie d'extraire la clef au moyen d'un programme frauduleux. En effet, la combinaison du mot APPLi avec un mot issu du réseau de paramètres physiques permet de différencier les codes de sélection pour chaque puce.

La figure 4 représente, de façon plus détaillée, un registre 22 à décalage et à rétroaction. Ce registre 22 est composé d'un registre à décalage 25 et d'une fonction de rétroaction 26. Le nombre m de bits B1, B2, B3, ..., Bm-1, Bm du registre à décalage correspond au nombre de bits du premier mot contenu dans le registre 5. La fonction de rétroaction 26 combine plusieurs bits du registre 25 pour calculer le bit Bm le plus à gauche, à chaque fois qu'un bit est fourni en sortie OUT du registre à décalage 25 (supposé aller de la gauche vers la droite).

De préférence, la fonction de rétroaction utilisée est une fonction linéaire constituée d'un OU exclusif de plusieurs bits du registre à décalage. La liste de bits du registre à décalage pris dans la fonction de rétroaction constitue la séquence de dérivation du registre à rétroaction linéaire ou configuration de Fibonacci. On peut aussi envisager d'utiliser une fonction de rétroaction non linéaire pourvu que celle-ci permette de générer en sortie un mot reproductible.

Dans un registre à décalage à rétroaction linéaire de m bits, on dispose de 2^{m}-1 séquences binaires distinctes. En d'autres termes, en chargeant les bits successifs fournis sur la sortie OUT dans un registre de taille adaptée, on peut obtenir des quantités secrètes ayant des tailles allant jusqu'à 2^{m}-1 bits. Cela constitue le mot le plus long avant répétition. Le fait d'utiliser un déchargement en série du code fourni par le registre à décalage à rétroaction linéaire permet d'allonger la quantité secrète par rapport à la longueur du mot fourni par le réseau de paramètres physiques.

Selon l'invention, l'identifiant issu du réseau de paramètres physiques sert à fixer le mot de départ du registre à décalage. Par la suite, l'unité centrale 9 commande un certain nombre de décalages du registre, ce qui permet de fournir le mot constituant la clé en sortie. Comme pour le chargement du registre 25, on peut prévoir soit un déchargement en parallèle du mot (sur n bits), soit un déchargement en série. Si le mot est chargé en série dans le registre 25, on prévoira simplement un sélecteur d'entrée pour choisir entre la sortie de la fonction de rétroaction et le chargement au niveau du bit de poids fort Bm.

Deux puces de circuit intégré ayant des identifiants différents au moyen de leurs réseaux de paramètres physiques fourniront, avec un même registre à décalage, des quantités différentes. De même, les différents registres à décalage 22 utilisés par l'invention dans le circuit de la figure 3 correspondent à des séquences de dérivation différentes qui donneront donc des résultats différents pour un même mot d'entrée.

En variante, plutôt que d'utiliser plusieurs registres à décalage à rétroaction linéaire, on pourra utiliser un même registre dont on programme la séquence de dérivation en fonction du paramètre identifiant l'application. Il pourra s'agir directement du paramètre APPLi ou d'un paramètre issu indirectement de cette grandeur.

Selon une autre variante, on utilise toujours un unique registre à décalage à rétroaction linéaire et le paramètre identifiant l'application conditionne le nombre de cycles de décalage appliqués au registre 25.

La figure 5 représente, pour mieux en comprendre le fonctionnement, un registre à décalage à rétroaction linéaire simplifié 22 de quatre bits dans lequel la séquence de dérivation est E1 B4. En d'autres termes, les bits B1 et B4, respectivement de poids le plus faible et le plus fort du mot contenu dans le registre 25' sur quatre bits sont combinés par une porte de type OU Exclusif 26' constituant la fonction de rétroaction. La sortie de la porte 26' constitue l'entrée du registre à décalage, donc l'entrée de la valeur B4. La séquence de sortie OUT est fournie par le bit de poids le plus faible (B1).

Les contenus successifs du registre 25' seront, en supposant une initialisation avec la valeur 1000, c'est-à-dire un chargement d'un état 1 dans le bit B4 après initialisation à 0 de tous les autres bits :
1000 ; 1100 ; 1110 ; 1111 ; 0111 ; 1011 ; 0101 ; 1010 ; 1101 ; 0110 ; 0011 ; 1001 ; 0100 ; 0010 ; 0001, avant de se répéter.

Le choix de la séquence de dérivation en fonction du nombre de combinaisons possibles avant répétition est à la portée de l'homme du métier en fonction de l'application. La réalisation d'un registre à décalage à rétroaction linéaire, que se soit sous forme matérielle ou logicielle, est parfaitement classique. On pourra se référer, par exemple, à l'ouvrage "Cryptographie appliquée" de Bruce Schneier édité par Wiley, deuxième édition, page 395 à 401.

Un avantage de la présente invention est qu'elle préserve le caractère volatil (éphémère) de chacune des quantités secrètes basées sur l'extraction d'un mot issu de paramètres physiques.

Bien entendu, la présente invention est susceptible de diverses variantes et modifications qui apparaîtront à l'homme de l'art. En particulier, la réalisation pratique du circuit objet de l'invention est à la portée de l'homme du métier à partir des indications fonctionnelles données ci-dessus.

De plus, bien que l'invention ait été exposée en faisant plus relation à des éléments matériels, celle-ci peut être mise en oeuvre par des moyens logiciels pourvu de conserver le recours à un réseau de paramètres physiques d'une puce de circuit intégré.

En outre, les tailles respectives des différents mots numériques utilisés sont définies en fonction de l'application. A cet égard, on notera que la mise en oeuvre de l'invention ne nécessite aucune modification des programmes applicatifs.

Enfin, d'autres fonctions que celles exposées à titre d'exemple pour individualiser l'identifiant pourront être utilisées. En particulier, on pourra recourir à toute fonction à sens unique et reproductible, comme par exemple les fonctions dites de hachage à sens unique. Par sens unique, on entend une transformation dont la connaissance du mot de sortie ne permet pas de déterminer le mot d'entrée (issu du réseau de paramètres physiques). Par reproductible, on entend une transformation fournissant toujours le même mot de sortie pour un mot d'entrée donné. Les différents modes de réalisation pourront en outre être combinés en fonction des types d'application.

## Revendications

1. Procédé de génération de plusieurs quantités secrètes (KEYi) par un circuit intégré en fonction de la destination de ces quantités secrètes, **caractérisé en ce qu'**il consiste à prendre en compte un premier mot numérique constituant un identifiant unique de la puce de circuit intégré et provenant d'un réseau de paramètres physiques (2), et à individualiser cet identifiant en fonction de l'application.

2. Procédé selon la revendication 1, **caractérisé en ce qu'**il consiste à combiner le premier mot numérique avec un deuxième mot (Wi) issu d'une mémoire non volatile en contenant plusieurs.

3. Procédé selon la revendication 1, **caractérisé en ce qu'**il consiste à utiliser le mot issu du réseau de paramètres physiques (2) dans un registre à décalage à rétroaction (22, 32).

4. Procédé selon la revendication 3, **caractérisé en ce qu'**il consiste à utiliser plusieurs registres à décalage à rétroaction (22, 32).

5. Procédé selon la revendication 3 ou 4, **caractérisé en ce que** le ou les registres à décalage (22, 32) sont à rétroaction linéaire.

6. Cellule de génération de plusieurs quantités secrètes (KEYi) au moyen d'un identifiant unique d'un circuit intégré issu d'un réseau de paramètres physiques (2), **caractérisé en ce qu'**il comporte des moyens pour individualiser un premier mot numérique issu du réseau de paramètres physiques à partir d'un paramètre (APPLi) fonction de la quantité souhaitée.

7. Cellule selon la revendication 6, **caractérisée en ce qu'**elle comporte au moins un registre à décalage à rétroaction (22, 32), destiné à être chargé avec le premier mot issu du réseau de paramètres physiques (2), et à fournir une desdites quantités secrètes (KEYi).

8. Cellule selon la revendication 6, **caractérisée en ce qu'**elle comporte un combineur (6) du premier mot issu du réseau de paramètres physiques (2) avec un deuxième mot numérique, extrait d'une mémoire non volatile (7, 37) et sélectionné en fonction d'un paramètre (APPLi) choisi selon la quantité souhaitée.

9. Cellule selon la revendication 8, **caractérisée en ce qu'**elle comporte en outre un brouilleur (12) des mots (Wi) contenus dans la mémoire non volatile, à partir du réseau de paramètres physiques (2).
